Europäisches Patentamt

European Patent Office

Office européen des brevets

(11) Veröffentlichungsnummer: **0 199 204**
**A2**

(12) # EUROPÄISCHE PATENTANMELDUNG

(21) Anmeldenummer: 86104946.8

(22) Anmeldetag: 10.04.86

(51) Int. Cl.⁴: **C01C 3/20**

(30) Priorität: 20.04.85 DE 3514408

(43) Veröffentlichungstag der Anmeldung:
**29.10.86 Patentblatt 86/44**

(84) Benannte Vertragsstaaten:
**AT BE CH DE FR GB IT LI NL**

(71) Anmelder: **Degussa Aktiengesellschaft**
**Weissfrauenstrasse 9**
**D-6000 Frankfurt am Main 1(DE)**

(72) Erfinder: **Bilger, Edgar, Dr.**
**Sackgasse 4 A**
**D-6456 Langenselbold(DE)**

(54) **Verfahren zur Herstellung von Alkalithiocyanat.**

(57) Gegenstand der Erfindung ist ein Verfahren zur Herstellung von festem oder gelöstem Alkalithiocyanat durch Umsetzung von gelöstem Alkalicyanid mit einer alkoholischen Schwefelsuspension beim Siedepunkt des Alkohols. Der Alkohol wird als Azeotrop abdestilliert und nicht umgesetzter Schwefel abgetrennt. Zur Isolierung des festen Produkts wird in der erhaltenen Lösung ein pH von 5 -9 eingestellt und dann eine Kristallisation nach Einengung oder ein Eindampfvorgang durchgeführt.

EP 0 199 204 A2

## Verfahren zur Herstellung von Alkalithicyanat

Die Erfindung bezieht sich auf ein Verfahren zur Herstellung einer wäßrigen Lösung von Alkalithiocyanat oder von festem Alkalithiocyanat durch Umsetzung einer vorgelegten wäßrigen Alkalicyanidlösung mit einer Suspension von Schwefel in einem wassermischbaren Alkohol, Abdestillieren des Alkohols und gegebenenfalls Isolieren des festen Produkts. ·

Alkalithiocyanate finden u. a. Anwendung in der chemischen und pharmazeutischen Industrie zur Herstellung von organischen Thiocyanaten, Isothiocyanaten, Senfölen, Herbiziden, Pestiziden und Bioziden, in der Fotoindustrie zum Tönen, Sensibilisieren und Stabilisieren, zur Herstellung etherischer Öle, in der Polyacrylnitrilherstellung und in der Galvanotechnik als Glanzbilder.

Es sind verschiedene Methoden bekannt, um Alkalithiocyanate durch Umsetzung von Metallcyaniden mit elementarem Schwefel nach der Gleichung

$$MCN + S \longrightarrow MSCN, \quad M = Na, K$$

herzustellen. Dabei sind stets Umsetzungen überlegen, bei denen kurze Reaktionszeiten ausreichen. Eine Verseifung des Cyanids und die Bildung von Nebenprodukten kann dadurch vermieden werden. So ist in Rom. RO 69,868 und im Gmelin Handbuch der anorg. Chemie, 8. Aufl. (1967) beschrieben, Alkalithiocyanat durch Umsetzung von Alkalicyanid mit Schwefel in wäßrigem Medium bei 90 -110° C herzustellen. Die zur Umsetzung notwendige Aktivierungsenergie muß dabei von außen zugeführt werden. Die Reaktionszeiten sind hierbei sehr lange und liegen bei 2 -5 Stunden. Während der Reaktion entstehen Alkalimetallsulfid und Ammoniak, die vor der Isolierung des festen Umsetzungsproduktes entfernt werden müssen. Die Ausbeuten liegen hier teilweise bei nur 95 %. Das Verfahren eignet sich deshalb nicht für eine technische Herstellung von Alkalithiocyanat.

Es ist bekannt, die Reaktion von Alkalicyanid mit Schwefel in wäßrigem Medium durch Zugabe kleiner Mengen von Pyridin zu beschleunigen - (Czech. 186.361). Die Ausbeuten sind mit 80 -90 % auch hier gering.

Eine aus Japan Kokai 77 99.998 bekannte Synthese von Alkalithiocyanat aus Alkalicyanid mit Schwefel in Wasser mit anschließender Einstellung des pH-Wertes auf pH < 7,5 mit $H_2SO_4$ hat den Nachteil, daß dadurch Sulfat eingetragen wird und zudem auch hier die zum Erreichen der Reaktionstemperatur notwendige Energie von außen zugeführt werden muß. Sodann ist bekannt, Alkalithiocyanat durch Umsetzung von Alkalicyanid mit Schwefel in wäßrigem Medium in Gegenwart von - schwefellösenden Sulfiden wie Ammoniumhydrogensulfid oder Alkalimetallsulfid herzustellen (US-PS 2,372,119). Nachteilig wirken sich bei diesem Verfahren die erforderlichen relativ großen Sulfid-Mengen aus, die bei der Gewinnung des Reinproduktes entfernt werden müssen. Eine Umsetzung in Gegenwart eines Netzmittels gemäß der GB-PS 739.635 bringt wegen der erforderlichen hohen Temperaturen von 100 -110°C und der damit verbundenen Verseifungsgefahr keinen weiteren Vorteil.

Ferner ist bekannt, Alkalithiocyanat durch Umsetzung von Alkalycyanid mit Schwefel bei der Schmelztemperatur des Schwefels durchzuführen (DE-PS 19 50 671). Die Reaktionszeiten liegen hier bei 1 -2 Stunden und sind wegen der Verseifungsgefahr kritisch. Auch bei dieser Umsetzung kann auf den Zusatz von Alkalisulfid nicht verzichtet werden. Zur Entfernung des Sulfids muß in einer weiteren Stufe $H_2O_2$ zugesetzt und das entstehende Sulfat mit Bariumcarbonat ausgefällt werden. Dadurch wird das Verfahren aufwendig und kostspielig.

Weiter ist bekannt, Alkalithiocyanat aus Alkalicyanid und Schwefel in Alkohol, Ketonen, Estern oder Ethern herzustellen (Japan Kokai 78 26.797). Die Reaktionszeiten sind zwar kurz, es müssen aber wegen der geringen Löslichkeit der Alkalicyanide und -thiocyanate in organischen Lösungsmitteln große Mengen Lösungsmittel eingesetzt werden, um in homogener Phase arbeiten zu können. Außerdem muß von hochreinem Natriumcyanid ausgegangen werden, um ein reines Produkt zu erhalten. Wegen der weiten Explosionsgrenzen und der Toxizität einiger vorgeschlagener Lösungsmittel sind bei diesem Verfahren aufwendige Arbeitsschutzmaßnahmen zu treffen, die das Verfahren unrentabel werden lassen.

Schließlich ist bekannt (DE-OS 23 29 894), Alkalithiocyanat durch Umsetzung einer vorgelegten wäßrigen Alkalicyanidlösung mit einer Suspension von Schwefel in einem wassermischbaren Alkohol, Abdestillieren des Alkohols und gegebenenfalls Isolieren des festen Produkts, herzustellen.

Die Reaktionszeiten sind mit mindestens 100 Min. bei der einzuhaltenden maximalen Reaktionstemperatur von etwa 50°C noch sehr lange. Im Falle des hier auch verwendeten Propanols ist eine destillative Abtrennung des organischen Mediums wegen des von Wasser nur wenig verschiedenen

Siedepunkts (ΔT = 2.8 grd) ohne erheblichen Aufwand nicht möglich. Auch die anderen vorgeschlagenen organischen Medien lassen sich kaum als reine Lösungsmittel destillieren.

Der Erfindung liegt die Aufgabe zugrunde, die sich nachteilig auswirkenden Faktoren wie lange Reaktionszeiten, Bildung von Sulfid, Verseifung des Cyanids, zu geringer Umsetzungsgrad, aufwendige Arbeitsschutzmaßnahmen, große Mengen organische Lösungsmittel, hoher Energieverbrauch und aufwendige Reinigung des Produkts zu überwinden und direkt in nahezu quantitativer Ausbeute zu einem sehr reinen Alkalithiocyanat zu gelangen, das ohne weitere Reinigungsschritte eingesetzt werden kann.

Die Aufgabe wird erfindungsgemäß gelöst durch ein Verfahren zur Herstellung einer wäßrigen Lösung von Alkalithiocyanat oder von festem Alkalithiocyanat durch Umsetzung einer vorgelegten wäßrigen Alkalicyanidlösung mit einer Suspension von Schwefel in einem wassermischbaren Alkohol, Abdestillieren des Alkohols und gegebenenfalls Isolieren des festen Produkts.

Das Verfahren ist dadurch gekennzeichnet, daß die Alkalicyanidlösung bei Temperaturen von maximal 50° C mit der Suspension von Schwefel in einem Alkohol mit einem Siedepunkt von unter 90° C, welche einen Schwefelüberschuß von höchstens 3, vorzugsweise 0,5 -2 Gew.% über die stöchiometrisch erforderliche Menge aufweist, versetzt, die Umsetzung bei der Siedetemperatur des Alkohols durchgeführt, der Alkohol als Azeotrop abdestilliert und dann verbliebener Schwefel abgetrennt wird, und zu der Isolierung des festen Produkts das restliche Wasser nach Einstellung eines pH von 5 -9, vorzugsweise 6 -8, teilweise oder ganz verdampft wird.

Es werden am besten Cyanidlösungen mit einem Gehalt von 25 -45 Gew.%, eingesetzt. Vorzugsweise beträgt die Konzentration bei NaCN 27 -33 Gew.%, bei KCN 37 -43 Gew.%.

Die erfindungsgemäße Umsetzung ist exotherm und erreicht schnell als Reaktionstemperatur die Siedetemperatur des Azeotrops. Nur in seltenen Fällen ist eine geringfügige Energiezufuhr nötig. Die Reaktionszeiten liegen bei Verwendung von bei ca. 80° C siedenden Alkoholen bei unter 45 Min., im Falle von tert. Butanol bei nur 20 Min. und sogar darunter. Um die Bildung von Alkalimetallpolysulfid zu unterdrücken, hat es sich als vorteilhaft erwiesen, einen Schwefelüberschuß von höchstens 3 Gew.%, vorzugsweise 0,5 -2 Gew.%, insbesondere 1 Gew.%, anzuwenden.

Nach Ende der Reaktion wird der Alkohol als Azeotrop abdestilliert und der Wiederverwendung zugeführt und der überschüssige Schwefel abfiltriert. Es resultiert eine Produktlösung mit sehr reinem Thiocyanat, welche als solche zur weiteren Verwendung eingesetzt bzw. vertrieben werden kann. Zur Isolierung des festen Produkts wird der pH-Wert, z. B. mit Salzsäure auf den vorgesehenen Wert eingestellt. Das durch Kristallisation aus einer eingeengten Lösung oder durch vollständige Verdampfung des Wassers, z. B. durch Dünnschichtverdampfung oder Sprühtrocknung, gewonnene Alkalithiocyanat fällt in nahezu quantitativer Ausbeute (> 99,5 %) und einer Reinheit von mindestens 98 %, meist > 98,5 % an.

Das Volumenverhältnis von Alkohol zu Wasser liegt vorzugsweise bei 1 : 5 bis 1 : 1. Bei Verwendung von NaCN ist ein Volumenverhältnis von 1 : 2 bis 1 : 3 und bei Verwendung von KCN ein Volumenverhältnis von 1 : 1,5 bis 1 : 2,5 günstig.

Als Schwefel kann Pulverschwefel oder kristallisierter Schwefel mit einer Korngröße von unter 1 mm bis 5 mm verwendet werden. Als Alkohol eignen sich Ethanol, Isopropanol oder tert. Butanol. Letzteres ist überlegen.

Gemäß einer sehr vorteilhaften Ausführungsform der Erfindung wird zur Einstellung des pH-Wertes vor der Isolierung des festen Produkts Ammoniumthiocyanat in gelöster oder fester Form verwendet. Auf diese Weise erhält man ein besonders wenig klumpendes festes Produkt, was für Lagerung, Transport und Handhabung einen erheblichen Vorteil darstellt.

Die Erfindung wird anhand der folgenden Beispiele näher erläutert:

Beispiel 1

Herstellung von Natriumthiocyanat unter Verwendung eines Ethanol/Wasser-Gemisches mit niedrigem Alkoholgehalt

In einem mit Rührer, Rückflußkühler und verschließbarem Einfüllstutzen zur Dosierung der Schwefelsuspension versehenen Dreihalskolben werden 50 g NaCN 98,2 %ig (1 Mol) in 100 ml $H_2O$ gelöst. 33 g Schwefel (1,03 Mol) werden in 20 ml Ethanol suspendiert und innerhalb von 2 Min. zu einer 50° C warmen Cyanidlauge gegeben. Durch die exotherme Reaktion steigt die Temperatur der Reaktionsmischung auf ca. 70° C an.

Zum Erreichen der Reaktionstemperatur (Siedetemperatur des Alkohols) muß weiter Wärmeenergie zugeführt werden. Die Reaktionszeit beträgt 100 Minuten. Nach Ende der Reaktion wird der Alkohol abdestilliert und der unumgesetzte Schwefel abfiltriert. Im wasserklaren Filtrat befinden sich 94 -98 Gew.% Natriumthiocyanat, bezogen auf NaCN. Das abdestillierte Ethanol/Wasser-Azeotrop kann für weitere Herstellungen verwendet werden. Das Reaktionsprodukt wird durch Kristallisation - (nach Aufkonzentrierung) isoliert. Im trockenen, rein weißen Natriumthiocyanat liegt der Gehalt bei 98,5 %. Der Sulfid-bzw. Cyanidgehalt liegt bei max. 0,003 % bzw. 0,05 %.

Beispiel 2

Herstellung von Natriumthiocyanat unter Verwendung eines 2-Propanol/Wasser-Gemisches mit hohem Alkoholgehalt

In einem mit Rührer, Rückflußkühler und verschließbarem Einfüllstutzen zur Dosierung der Schwefelsuspension versehenen Dreihalskolben werden 50 g NaCN 98,2 %ig (1 Mol) in 100 ml $H_2O$ gelöst. 33 g Schwefel (1,03 Mol) werden in 100 ml 2-Propanol suspendiert und innerhalb von 2 Min. zu einer 10° C warmen Cyanidlauge gegeben. Bei dieser Vorlagetemperatur reicht die Reaktionswärme aus, um die Siedetemperatur des Alkohols innerhalb von 20 Min. zu erreichen. Die Reaktionszeiten betragen 45 Minuten. Nach Ende der Reaktion wird das 2-Propanol/Wasser-Azeotrop abdestilliert und der überschüssige Schwefel abfiltriert. Im leicht bräunlichen Filtrat befinden sich 98 -99 % Natriumthiocyanat, bezogen auf NaCN. In dem durch Sprühtrocknung isolierten Produkt sind noch bis zu 0,01 % Sulfid nachweisbar. Der Gehalt an Natriumthiocyanat liegt bei 98,5 %.

Beispiel 3

Herstellung von Natriumthiocyanat unter Verwendung eines tert. Butanol/Wasser-Gemisches mit mittlerem Alkoholgehalt

In einem mit Rührer, Rückflußkühler und verschließbarem Einfüllstutzen zur Dosierung der Schwefelsuspension versehenen Dreihalskolben werden 500 g NaCN 98,2 %ig (10 Mol) in 1170 ml $H_2O$ gelöst. 323 g Schwefel (10,1 Mol) werden in 500 ml tert. Butanol suspendiert und innerhalb von 2 Min. zu einer ca. 30° C warmen Natriumcyanidlauge gegeben. Durch die exotherme Reaktion steigt die Temperatur innerhalb von 8 -9 Min. auf 82 -85° C (Siedetemperatur des Azeotrops). Die Reaktionstemperatur wird für die Dauer von 35 -40 Min. gehalten. Nach Ende der Reaktion wird das Alkohol/Wasser-Azeotrop abdestilliert und der überschüssige Schwefel abfiltriert. In der wasserklaren Lösung befinden sich 99,8 % NaSCN, bezogen auf NaCN. Nach Einstellung eines pH von 7,3 durch Zugabe von Ammoniumthiocyanat und anschließender Sprühtrocknung liegt der Gehalt im trockenen, rein weißen Natriumthiocyanat bei 98,8 %. Die Gehalte an Sulfid bzw. Cyanid liegen bei < 10 ppm. Der gleiche Reaktionsverlauf mit ebenso reinem Produkt ergibt sich bei Verwendung des jeweils angefallenen Azeotrops an Stelle des reinen Alkohols.

Beispiel 4

Herstellung von Kaliumthiocyanat unter Verwendung eines tert. Butanol/Wasser-Gemisches mit mittlerem Alkoholgehalt

In einem mit Rührer, Rückflußkühler und verschließbarem Einfüllstutzen zur Dosierung der Schwefelsuspension versehenen Dreihalskolben werden 65,6 g Kaliumcyanid 99,3 % (1 Mol) in 100 ml $H_2O$ gelöst und auf 30° C erwärmt.

33 g Schwefel (1,03 Mol) werden in 50 ml tert. Butanol suspendiert und innerhalb von 2 Min. zugegeben. Die Reaktionszeit liegt bei 14 -22 Minuten. Nach Ende der Reaktion wird das Azeotrop abdestilliert und unumgesetzter Schwefel abfiltriert. Im wasserklaren Filtrat befinden sich jeweils 99,5 Gew.% Kaliumthiocyanat, bezogen auf KCN. Zum Filtrat werden 750 mg Ammoniumthiocyanat gegeben und das Reaktionsprodukt durch Sprühtrocknung isoliert. Die Reinheit des Produktes liegt bei 99,2 %. Die Gehalte an Cyanid bzw. Sulfid liegen bei < 10 ppm. Der pH-Wert einer 5 %igen Lösung lieft bei 7,5.

**Ansprüche**

1. Verfahren zur Herstellung einer wäßrigen Lösung von Alkalithiocyanat oder von festem Alkalithiocyanat durch Umsetzung einer vorgelegten wäßrigen Alkalicyanidlösung mit einer Suspension von Schwefel in einem wassermischbaren Alkohol, Abdestillieren des Alkohols und gegebenenfalls Isolieren des festen Produkts, dadurch gekennzeichnet, daß die Alkalicyanidlösung bei Temperaturen von maximal 50° C mit der Suspension von Schwefel in einem Alkohol mit einem Siedepunkt von unter 90° C, welche einen Schwefelüberschuß von höchstens 3, vorzugsweise 0,5 -2 Gew.% über die stöchiometrisch erforderliche Menge aufweist, versetzt, die Umsetzung bei der Siedetemperatur des Alkohols durchgeführt, der Alkohol als Azeotrop abdestilliert und dann verbliebener Schwefel abgetrennt wird, und zu der Isolierung des festen Produktes das restliche Wasser nach Einstellung eines pH von 5 -9, vorzugsweise 6 -8, teilweise oder ganz verdampft wird.

2. Verfahren nach Anspruch 1, dadurch gekennzeichnet, daß das Volumenverhältnis von Alkohol zu Wasser bei 1 : 5 bis 1 : 1 liegt.

3. Verfahren nach Anspruch 2, dadurch gekennzeichnet, daß bei Verwendung von Natriumcyanid das Volumenverhältnis von Alkohol zu Wasser bei 1 : 2 bis 1 : 3 liegt.

4. Verfahren nach Anspruch 2, dadurch gekennzeichnet, daß bei Verwendung von Kaliumcyanid das Volumenverhältnis von Alkohol zu Wasser bei 1 : 1,5 bis 1 : 2,5 liegt.

5. Verfahren nach den Ansprüchen 1 -4, dadurch gekennzeichnet , daß Pulverschwefel oder kristallisierter Schwefel mit einer Korngröße von unter 1 mm bis 5 mm verwendet wird.

6. Verfahren nach den Ansprüchen 1 -5, dadurch gekennzeichnet, daß als Alkohol Ethanol, 2-Propanol oder tert. Butanol verwendet wird.

7. Verfahren nach den Ansprüchen 1 -6, dadurch gekennzeichnet, daß zur Einstellung des pH-Wertes vor der Isolierung des festen Produkts Ammoniumthiocyanat verwendet wird, wobei ein pH-Wert von 6 bis 8 bevorzugt wird.